# EUROPÄISCHE PATENTSCHRIFT

(11) **EP 2 650 687 B1**
(45) Veröffentlichungstag und Bekanntmachung des Hinweises auf die Patenterteilung: **02.05.2018**
(21) Anmeldenummer: 13161896.9
(22) Anmeldetag: 30.03.2013
(51) Int. Cl.: G01N 35/00, G02B 21/34, G01N 35/04

(54) **Objektträger-Bevorratungs- und -Bereitstellungs-Vorrichtung**
Object support supply and preparation device
Dispositif destiné à la mise à disposition et à l'approvisionnement d'un support d'objet

(30) Priorität: 10.04.2012 DE 102012007134
(43) Veröffentlichungstag der Anmeldung: 16.10.2013
(73) Patentinhaber: Märzhäuser Wetzlar GmbH & Co. KG, 35579 Wetzlar (DE)
(72) Erfinder: Rippl, Christophrer M., 35578 Wetzlar (DE); Tide, Ralf, 61440 Oberursel (DE); Wagner, Uwe, 35794 Mengerskirchen (DE); Scherer, Sebastian, 35576 Wetzlar (DE); Nagel, Lukas, 35390 Gießen (DE); Löhr, Andreas, 35794 Mengerskirchen (DE)
(74) Vertreter: Stamer, Jan

(56) Entgegenhaltungen:
- DE-A1-102008 037 876
- US-A- 5 690 892
- US-A1- 2003 051 973

## Beschreibung

Die Erfindung betrifft eine Objektträger-Bevorratungs- und - Bereitstellungsvorrichtung mit den Merkmalen des Oberbegriffs des Anspruchs 1.

Vorrichtungen dieser Art sind in unterschiedlicher Ausführung bekannt. US 5 690 892 A, z.B., zeigt eine Objektträger-Bevorratungs- und - Bereitstellungs-Vorrichtung mit einem Objektträgermagazin mit separaten Gefachen zur auswechselbaren Aufnahme von Objektträgern und einem in einem Magazinträgerrahmen höhenverstellbaren Magazinlift zur auswechselbaren Aufnahme von Objektträgermagazinen.

Sie dienen dazu, vorbereitete Objektträger unterschiedlicher Art insbesondere für eine automatische Analyse in einem Mikroskop bereitzustellen. Das Mikroskop und die Vorrichtung mit den Objektträgern sind im Allgemeinen getrennte Baueinheiten, die sorgfältig zueinander ausgerichtet werden müssen, um eine sichere Übergabe der Objektträger von einer Baueinheit zu der anderen und zurück zu gewährleisten. Bereits geringe Dejustierungen während des Betriebs einer automatischen Analyse können zu einer Unterbrechung des Untersuchungsablaufs und damit zeitlichen Verzögerungen im gesamten Prozeßablauf führen. Erschwert wird die Beibehaltung einer sicheren Übergabeposition bei Mikroskopen mit Tischhöhenverstellung zur Fokussierung der Objektive auf die Objektebene. Aber auch bei Mikroskopen mit feststehenden Mikroskoptischen, wie z.B. Inversmikroskopen, entstehen Probleme bei der Anbindung an vorgegebene unterschiedliche Tischhöhen und bei möglichen Erschütterungen am Aufstellort, die zu einer gegenseitigen Verschiebung der beiden Baugruppen führen Weitere Dokumente der Stand der Technik sind z.B. DE 10 2008 037876 und US 2003/051973

DE 10 2008 037876 zeigt ein Positionierungssystem umfassend ein Sensoreinheit und einen Masstab, die relativ zueinander bewegbar sind. Dieses System wird für Positionierung relativ einen XY-Tisch benutzt.

US 2003/051973 zeigt einen System für die Manipulation von Wafern mit einem Lift für Wafer-Kassetten, der relativ zu einen Rahmen entlang zwei Stangen beweglich angeordnet ist, wobei einen Motor mit Spindel zur Höhenverstellung des Lifts angeordnet ist. Der Erfindung lag daher die Aufgabe zugrunde, eine universell einsatzfähige Objektträger-Bevorratungs- und - Bereitstellungsvorrichtung zu schaffen, die mit unterschiedlichen Mikroskop-Systemen verbunden werden kann und in der Lage ist, aus einer anfänglichen Justierung heraus gegenseitige Höhenänderungen zwischen der Bereitstellungsebene und der Entnahmeebene automatisch auszugleichen.

Diese Aufgabe wird erfindungsgemäß bei einer Vorrichtung der eingangs genannten Art durch die kennzeichnenden Merkmale des Anspruchs 1 gelöst. Vorteilhafte Weiterbildungen ergeben sich aus den Merkmalen der Unteransprüche.

An den im Magazinträgerrahmen angeordneten vertikalen Stangenpaaren können zwei für die Funktion der Vorrichtung wesentliche Ebenen parallel zueinander verschoben werden. Es sind dies die Ebene der Objektträger in den Gefachen der Objektträgermagazine und die durch den gleitend gelagerten rechtwinkligen Koppelrahmen mit Brücke gebildete Ebene. Die Brücke ist dazu vorgesehen, an einem Mikroskoptisch befestigt zu werden, so dass der Koppelrahmen mit Brücke eine zur Ebene des Mikroskoptisches feste Referenzebene bildet. Durch die gleitende Lagerung des Koppelrahmens ist eine problemlose Ankopplung an unterschiedliche und auch wechselnde Mikroskoptischebenen gewährleistet. Die vertikalen Stangen können in unterschiedlicher Form zur linearen Führung ausgestaltet sein. Die Gefache in den Objektträgermagazinen können an unterschiedliche Formen der Objektträger, wie z.B. rechteckige Objektträger mit Glasabdeckung, Petrischalen oder Titerplatten, angepasst sein. Wegen der gleichschenkligen Ausbildung des Koppelrahmens werden bei einer Ankopplung eines Mikroskoptisches an die Brücke die Objektträgermagazine immer in gleichem Abstand zu seitlichen Begrenzung des Mikroskoptisches auf und ab bewegt.

Mit Hilfe des am Magazinlift befestigten Linearmaßstabs und des am gleitend gelagerten Koppelrahmen angeordneten Sensors kann deren Relativlage zueinander bestimmt werden. Für die Übergabe der Objektträger vom Objektträgermagazin zum Mikroskoptisch bildet die jeweilige Höheneinstellung des Koppelrahmens die Referenzebene. Über den am Magazinträgerrahmen befestigten Linearmotor und die dadurch bewegte Spindel kann der Magazinlift relativ zur Referenzlage des Koppelrahmens verstellt werden. Bei bekanntem Abstand der Gefache im Objektträgermagazin kann daher jeder gewünschte Objektträger in der bei einer anfänglichen Justierung ermittelten Übergabeebene relativ zur Referenzebene zur Entnahme bereitgestellt werden.

Der an dem Koppelrahmen befestigte Sensor wird in einer Höhe angebracht, bei der sowohl in der höchsten als auch in der niedrigsten Übergabestellung der Objektträgermagazine eine Ablesung am Linearmaßstab möglich ist. Dabei ist auch ein Toleranzbereich zur Anpassung an unterschiedliche Höhen der Ankopplung an einen Mikroskoptisch zu berücksichtigen. Um diesen Toleranzbereich und damit die Höhe des Magazinträgerrahmens und die Länge des Linearmaßstabs so gering wie möglich halten zu können, ist es vorteilhaft, den Magazinträgerrahmen mit seinen senkrechten Rahmenteilen in einen Ständer in unterschiedlichen diskreten Höhen einzusetzen, die den notwendigen Toleranzbereich für die Höhenverstellung des Koppelrahmens zur Verfügung stellen. Der Einsatz in einen Ständer ist insbesondere zur Überbrückung größerer Höhenunterschiede bei Stativen von Inversmikroskopen von Vorteil.

Bei einem bekannten System zur Entnahme der Objektträger aus den Gefachen eines Objektträgermagazins ist ein Greifer vorgesehen, bei dem die Objektträger zur Entnahme und zum Transport federnd gegen eine Andruckplatte gedrückt werden. Zur Ablage in einem Gefach beim Zurückführen des Objektträgers muss dieser von der Andruckplatte abgestreift werden. Dazu kann in den Koppelrahmen parallel zur Brücke eine anhebbare Traverse mit senkrecht nach oben weisenden Stiften angeordnet sein. Die Stifte sind so dimensioniert und positioniert, dass sie in den Greifer hinter einem Objektträger hochfahren können und beim Zurückfahren des Greifers den Objektträger von der Andruckplatte absteifen, so dass er in dem Gefach liegen bleibt.

Vorzugsweise kann auf dem Koppelrahmen parallel zur Brücke ein manuell verschiebbarer Objektträgerschlitten angeordnet sein. Wenn der Magazinlift ausreichend hoch gefahren wird, kann der Objektträgerschlitten unter den Objektträgermagazinen in eine geeignete Übergabeposition für die darin gelagerten Objektträger geschoben werden. Die Höhe der Einlageebene für die Objektträger in dem Objektträgerschlitten ist an die durch den Koppelrahmen gebildete Referenzebene so anzupassen, dass sie mit der für ein Objektträgermagazin einjustierten Übergabeebene übereinstimmt.

Eine weitere vorteilhafte Ausgestaltung der Vorrichtung besteht darin, an dem Magazinträgerrahmen einen die Objektträgermagazine übergreifenden Rahmenvorbau anzuordnen, an dem zu den offenen Gefachen der Objektträgermagazine weisende Rollen an federnden Hebelarmen gelagert sind. Die Hebelarme sind so gegen die aus den Gefachen der Objektträgermagazine möglicherweise hervorstehenden Objektträger geneigt, dass beim Auf- und Abfahren des Magazinlifts die Objektträger gleichförmig in die Gefache eingeschoben werden.

Dadurch wird sichergestellt, dass für ein Handlingsystem zur Entnahme der Objektträger reproduzierbare Greifpositionen gegeben sind.

Zur Kompensation des Gewichts des Koppelrahmens und weiterer Anbauteile kann es vorteilhaft sein, an dem Rahmenvorbau auch ein vorgespanntes Rollfederband anzuordnen, dessen freies Ende an dem Koppelrahmen befestigt ist. Dadurch wird einer Verkippung des Koppelrahmens bzw. Klemmung der Führungselemente des Koppelrahmens an den Stangen im Magazinträgerrahmen entgegengewirkt.

In der Zeichnung ist ein Ausführungsbeispiel der erfindungsgemäßen Vorrichtung schematisch dargestellt und wird anhand der Figuren nachfolgend näher beschrieben. Dabei zeigen
Fig.1 eine Schrägansicht auf die Frontseite der Vorrichtung und
Fig.2 eine Schrägansicht auf die Rückseite der Vorrichtung.

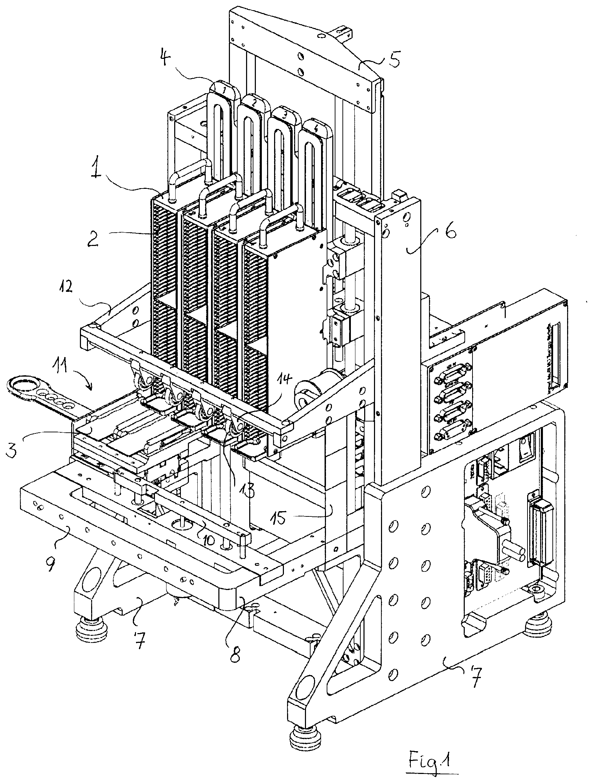

Die in Fig. 1 dargestellte Frontansicht zeigt vier Objektträgermagazine 1 mit Gefachen 2 zur Bevorratung von hier nicht dargestellten Objektträgern 3. Die Objektträgermagazine 1 sind in Schienen 4 an einem Magazinlift 5 auswechselbar eingesetzt. Die Gefache 2 sind frontseitig zur Einlage oder Entnahme der Objektträger offen.

Der Magazinlift 5 ist in einem Magazinträgerrahmen 6 höhenverstellbar gelagert. Der Magazinträgerrahmen 6 ist mit seinen senkrechten Rahmenteilen in einen Ständer 7 eingesetzt. Der Ständer 7 weist Befestigungsstellen in verschiedenen Höhen an den senkrechten an den senkrechten Rahmenteilen auf. Durch Verschieben des Magazinlifts 5 in dem Magazinträgerrahmen 6 können Objektträger 3 zur Übergabe auf einen nicht dargestellten Mikroskoptisch bereitgestellt werden.

In dem Magazinträgerrahmen 6 ist auch ein gleichschenkliger Koppelrahmen 8 mit Brücke 9 gleitend gelagert. Die Brücke 9 ist zur festen Verbindung mit dem Untersuchungstisch eines nicht dargestellten Mikroskops vorgesehen. In den Koppelrahmen 8 ist parallel zur Brücke 9 eine anhebbare Traverse 10 eingesetzt. Die Traverse 10 weist nicht weiter dargestellte aufrechte Stifte auf, die bei Einschieben eines Objektträgers 3 in ein Gefach 2 den Objektträger von einer automatischen Greifvorrichtung abstreifen können.

Auf dem Koppelrahmen 8 ist ein parallel zur Brücke 9 manuell verschiebbarer Objektträgerschlitten 11 gelagert. Der Objektträgerschlitten 11 weist zwei Gefache zur Aufnahme von Objektträgern 3 auf. Die vorderen Enden der Objektträger 3 stehen frei aus den Gefachen vor, so dass sie von einer nicht dargestellten automatischen Greifvorrichtung zur Entnahme und zum Zurückführen gefasst werden können. Die Höhe der Gefachebene des Objektträgerschlittens 11 gegenüber der durch den Koppelrahmen 8 gebildeten Referenzebene ist an die vorjustierte Übergabeebene der Objektträgermagazine 2 zum Mikroskoptisch angepasst.

Am Magazinträgerrahmen 6 ist ein die Objektträgermagazine 1 übergreifender Rahmenvorbau 12 befestigt, an dem Rollen 13 über federnd gelagerte Hebelarme 14 schwenkbar angelenkt sind. Die Rollen 13 sind gegen die offenen Gefache 2 der Objektträgermagazine 1 gerichtet und schieben beim Auf- und Abbewegen des Magazinlifts 5 aus den Gefachen 2 vorstehende Objektträger 3 bis zu einer gleichförmigen Tiefe in die Gefache 3 ein.

Der Rahmenvorbau 12 dient auch zur Befestigung eines vorgespannten Rollfederbandes 15, das mit seinem freien Ende am Koppelrahmen 8 befestigt ist und über die Federvorspannung eine Gewichtsentlastung des Koppelrahmens 8 bewirkt, so dass beim Anschrauben der Brücke 9 an einen Mikroskoptisch keine einseitigen Lastmomente auf diesen wirken.

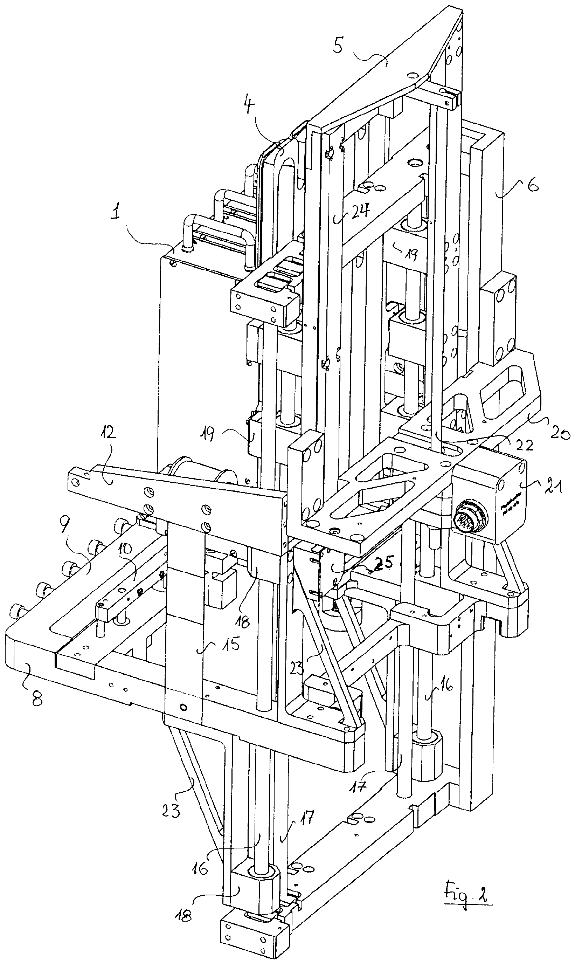

Bei der in Fig. 2 dargestellten Rückansicht der Vorrichtung ist der in der Figur vordere senkrechte Rahmenteil des Magazinträgerrahmens 6 weggelassen, um die Anordnung der Führungselemente für die im Magazinträgerrahmen 6 auf und ab bewegten Geräteteile besser sichtbar zu machen. Zur vertikalen Führung des Koppelrahmens 8 und des Magazinlifts 5 sind in der Nähe der senkrechten Rahmenteile des Magazinträgerrahmens 6 je zwei erste und zweite Stangen 16, 17 parallel zueinander und zum senkrechten Rahmenteil angeordnet. Die Stangen 16, 17 sind als Rundstangen ausgebildet. Es können aber Stangenelemente mit Führungsprofilen vorgesehen sein.

Der Magazinlift 5 ist an den ersten Stangen 17 in der Höhe verstellbar. Die frontseitig angeordneten Schienen 4 des Magazinlifts 5 und der rückseitige Magazinliftrahmen sind über erste Gleitbuchsen 19, die auf den ersten Stangen 17 laufen, miteinander verbunden. Quer zu den Stangenrichtungen ist an den senkrechten Rahmenteilen des Magazinträgerrahmens 6 ein Trägerelement 20 befestigt, an dem ein Linearmotor 21 mit einer Spindel 22 angeordnet ist. Der Kopf der Spindel 22 ist am oberen Querrahmen des Magazinlifts 5 ortsfest drehbar gelagert, so dass bei einer Drehung der Spindel 22 der Magazinlift 5 auf und ab verschoben wird.

An den zweiten Stangen 16 ist der Koppelrahmen 8 gleitend gelagert. Die die zweiten Stangen 16 umschließenden zweiten Gleitbuchsen 18 sind über Stützwinkel 23 am Koppelrahmen 8 befestigt und gewährleisten über ihren Abstand eine kippsichere Führung des Koppelrahmens 8 in dem Magazinträgerrahmen 6, wobei die Gewichtsentlastung über das Rollfederband 15 eine Verklemmung der Gleitbuchsen 18 verhindert.

An einem der rückseitigen senkrechten Rahmenteile des Magazinlifts 5 ist ein Linearmaßstab 24 befestigt, dem ein Sensor 25 zugeordnet ist, der am Koppelrahmen 8 befestigt ist. Bei einer Änderung der Höheneinstellung des Koppelrahmens 8 bewegt sich der Sensor 25 relativ zum Linearmaßstab 24. Die dabei vom Sensor 25 ermittelte Verschiebestrecke wird an die Steuerung des Linearmotors 21 übertragen, der über eine geeignete Steuerung der Spindel 22 den Linearmaßstab 24 mit dem Magazinlift 5 zur Kompensation der Verschiebestrecke verstellt.

### Bezugszeichenliste

- 1: Objektträgermagazin
- 2: Gefach
- 3: Objektträger
- 4: Schiene
- 5: Magazinlift
- 6: Magazinträgerrahmen
- 7: Ständer
- 8: Koppelrahmen
- 9: Brücke
- 10: Traverse
- 11: Objektträgerschlitten
- 12: Rahmenvorbau
- 13: Rollen
- 14: Hebelarm
- 15: Rollfederband
- 16: zweite Stangen
- 17: erste Stangen
- 18: zweite Gleitbuchsen
- 19: erste Gleitbuchsen
- 20: Trägerelement
- 21: Linearmotor
- 22: Spindel
- 23: Stützwinkel
- 24: Linearmaßstab
- 25: Sensor

## Patentansprüche

1. Objektträger-Bevorratungs- und -Bereitstellungs-Vorrichtung mit mindestens einem Objektträgermagazin (1) mit separaten Gefachen (2) zur auswechselbaren Aufnahme von Objektträgern (3) und einem in einem Magazinträgerrahmen (6) höhenverstellbaren Magazinlift (5) zur auswechselbaren Aufnahme von Objektträgermagazinen (1), wobei
- in dem Magazinträgerrahmen (6) zwei parallel zueinander und senkrecht stehende Stangenpaare (16, 17) angeordnet sind, wobei
- an jeweils zwei einander zugeordneten ersten Stangen (17) der Stangenpaare der Magazinlift (5) höhenverstellbar geführt ist, und
- an den jeweils zwei einander zugeordneten zweiten Stangen (16) der Stangenpaare ein senkrecht zu der von den ersten Stangen (17) gebildeten Ebene ausgerichteter gleichschenkliger Koppelrahmen (8) mit einer parallel zu der Ebene angeordneten Brücke (9) gleitend gelagert ist,
- an dem Magazinlift (5) ein parallel zur Richtung der Stangen (17) ausgerichteter Linearmaßstab (24) befestigt ist,
- an der gleitenden Lagerung des Koppelrahmens (8) ein Sensor (25) zum Auslesen seiner Position gegenüber dem Linearmaßstab (24) angeordnet ist und
- an dem Magazinträgerrahmen (6) ein quer zur Stangenrichtung ausgerichtetes Trägerelement (20) für einen Linearmotor (21) mit Spindel (22) zur Höhenverstellung des Magazinlifts (5) relativ zur aktuellen Position des Sensors (25) angeordnet ist.

2. Objektträger-Vorrichtung nach Anspruch 1, **dadurch gekennzeichnet, dass** der Magazinträgerrahmen (6) mit seinen senkrechten Rahmenteilen in einen Ständer (7) in unterschiedlichen Höhen einsetzbar ist.

3. Objektträger-Vorrichtung nach Anspruch 1, **dadurch gekennzeichnet, dass** innerhalb des gleitend gelagerten Koppelrahmens (8) parallel zur Brücke (9) eine anhebbare Traverse (10) mit aufrecht stehenden senkrechten Stiften angeordnet ist.

4. Objektträger-Vorrichtung nach Anspruch 1, **dadurch gekennzeichnet, dass** auf dem Koppelrahmen (8) ein parallel zur Brücke (9) manuell verschiebbarer Objektträgerschlitten (11) gelagert ist.

5. Objektträger-Vorrichtung nach Anspruch 1, **dadurch gekennzeichnet, dass** an dem Magazinträgerrahmen (6) ein die Objektträgermagazine (1) übergreifender Rahmenvorbau (12) angeordnet ist, an dem zu den offenen Gefachen (2) der Objektträgermagazine (1) weisende Rollen (13) an federnden Hebelarmen (14) gelagert sind.

6. Objektträger-Vorrichtung nach Anspruch 5, **dadurch gekennzeichnet, dass** an dem Rahmenvorbau (12) ein vorgespanntes Rollfederband (15) angeordnet ist, dessen freies Ende an dem Koppelrahmen (8) zur Gewichtsentlastung befestigt ist.

## Claims

1. Microscope slide supply and preparation device comprising at least one microscope slide magazine (1) with separate compartments (2) for the interchangeable accommodation of microscope slides (3), and a magazine lift (5) that is vertically adjustable in a magazine support frame (6) for the interchangeable accommodation of microscope slide magazines (1), wherein
- two pairs of rods (16, 17) are arranged parallel to each other and standing upright in the magazine support frame (6), wherein
- the magazine lift (5) is vertically adjustably guided on respectively two mutually associated first rods (17) of the pairs of rods, and
- an equilateral coupling frame (8) oriented at right angles to the plane formed by the first rods (17) and having a bridge (9) arranged parallel to the plane is mounted in a sliding manner on the respectively two mutually associated second rods (16) of the pairs of rods,
- a linear scale (24) aligned parallel to the direction of the rods (17) is fixed to the magazine lift (5),
- on the sliding mounting of the coupling frame (8) there is arranged a sensor (25) for reading the position thereof with respect to the linear scale (24), and
- on the magazine support frame (6) there is arranged a support element (20) aligned transversely with respect to the rod direction, for a linear motor (21) with spindle (22) for the vertical adjustment of the magazine lift (5) relative to the current position of the sensor (25).

2. Microscope slide device according to Claim 1, **characterized in that** the magazine support frame (6) can be inserted into an upright (7) at different heights by its vertical frame parts.

3. Microscope slide device according to Claim 1, **characterized in that** a cross-member (10) that can be raised and has vertical pins standing upright is arranged within the slidingly mounted coupling frame (8).

4. Microscope slide device according to Claim 1, **characterized in that** a microscope slide carriage (11) that can be displaced manually parallel to the bridge (9) is mounted on the coupling frame (8) .

5. Microscope slide device according to Claim 1, **characterized in that** a front frame structure (12) reaching over the microscope slide magazine (1) is arranged on the magazine support frame (6), on which structure rollers (13) pointing towards the open compartments (2) of the microscope slide magazine (1) are mounted on sprung lever arms (14) .

6. Microscope slide device according to Claim 5, **characterized in that** a preloaded roller spring tape (15) is arranged on the front frame structure (12), its free end being fixed to the coupling frame (8) for weight relief.

## Revendications

1. Ensemble de mise en réserve et de préparation de porte-objets, présentant
au moins un magasin (1) à porte-objets doté de compartiments séparés (2) permettant de reprendre de manière remplaçable des porte-objets (3) et
un ascenseur (5) à magasins, ajustable en hauteur dans un bâti (6) de support de magasins, pour la reprise remplaçable de magasins (1) à porte-objets,
deux paires (16, 17) perpendiculaires l'une à l'autre de tringles parallèles l'une à l'autre étant disposées dans le bâti (6) de support de magasins,
l'ascenseur (5) à magasins étant guidé de manière ajustable en hauteur sur deux premières tringles (17) mutuellement associées de la paire de tringles et
un bâti d'accouplement (8) à branches identiques, orienté perpendiculairement au plan formé par les premières tringles (17) et présentant un pont (9) disposé parallèlement à ce plan étant monté à coulissement sur les deux deuxièmes tringles (16), associées l'une à l'autre, de la paire de tringles,
une échelle linéaire (24) alignée parallèlement à la direction des tringles (17) étant fixée sur l'ascenseur (5) à magasins,
un capteur (25) de lecture de sa position par rapport à l'échelle linéaire (24) étant disposé sur le support coulissant du bâti de couplage (8),
un élément de support (20) pour un moteur linéaire (21) doté d'une broche (22) qui permet d'ajuster l'ascenseur (5) à magasins en hauteur par rapport à la position effective du capteur (25) et aligné transversalement par rapport à la direction des tringles étant disposé sur le bâti (6) de support de magasins.

2. Ensemble de porte-objets selon la revendication 1, **caractérisé en ce que** le bâti (6) de support de magasins peut être ajusté à différentes hauteurs dans un statif (7), avec ses parties perpendiculaires d'encadrement.

3. Ensemble de porte-objets selon la revendication 1, **caractérisé en ce qu'**une traverse relevable (10) présentant des tiges perpendiculaires placées debout est disposée à l'intérieur du bâti (8) de couplage, monté à coulissement, et parallèlement au pont (9).

4. Ensemble de porte-objets selon la revendication 1, **caractérisé en ce qu'**un chariot (11) à porte-objets, apte à être déplacé manuellement parallèlement au pont (9), est monté sur le bâti de couplage (8).

5. Ensemble de porte-objets selon la revendication 1, **caractérisé en ce qu'**un élément d'encadrement (12) qui chevauche le magasin (1) à porte-objets et sur lequel des rouleaux (13) orientés vers les compartiments ouverts (2) des magasins (1) à porte-objets sont montés sur des bras de levier (14) élastiques, est disposé sur le bâti (6) de support de magasins.

6. Ensemble de porte-objets selon la revendication 5, **caractérisé en ce qu'**une bande de roulement élastique précontrainte (15) dont l'extrémité libre est fixée sur le bâti (8) de couplage en vue de délester son poids est disposée sur l'élément d'encadrement (12).
